# EUROPEAN PATENT SPECIFICATION

(11) **EP 4 172 390 B1**
(45) Date of publication and mention of the grant of the patent: **18.02.2026**
(21) Application number: 21736754.9
(22) Date of filing: 15.06.2021
(51) Int. Cl.: B29B 7/42, B29B 7/74, B29B 9/06, B29B 9/16, B29B 17/02, B29C 48/00, B29C 48/76, D01G 11/00, B29C 48/275, B29C 48/385, B29C 48/691, B29B 17/04, D04H 1/4274

(54) **APPARATUS FOR RECYCLING NON-WOVEN MATERIALS**
VORRICHTUNG ZUR WIEDERVERWERTUNG VON VLIESSTOFFEN
APPAREIL POUR RECYCLER DES MATÉRIAUX NON TISSÉS

(30) Priority: 26.06.2020 IT 202000015424
(43) Date of publication of application: 03.05.2023
(73) Proprietor: Teso, Carlo, 36100 Vicenza (IT)
(72) Inventor: Teso, Carlo, 36100 Vicenza (IT)
(74) Representative: Burchielli, Riccardo
(86) International application number: PCT/IT2021/050186
(87) International publication number: WO 2021/260746

(56) References cited:
- EP-A1- 2 995 436
- CN-A- 104 029 373
- CN-A- 108 251 901

## Description

### Technical Field

This invention relates to an apparatus for recycling non-woven fabric (NWF) materials, in particular for separating metal components from the non-woven fabric.

### Background Art

The recycling of non-woven fabric (NWF) materials and plastics in general has become a highly topical issue in recent years, linked to the concept of the "circular economy" and, ultimately, protection of the environment. Non-woven fabric (NWF) is the generic term to indicate an industrial product similar to fabric, but obtained by processes other than weaving (crossing warp and weft threads on a loom) and knitting. NWF is basically a product which is obtained with the use of non-woven synthetic resins and fibres, preferably polyester or polypropylene, which undergo complex and repeated processes. This makes it possible to produce a finished product that is particularly suitable for various fields and applications, including:
- Construction (for example, for covering or finishing ceilings and false ceilings);
- Furniture (wallpaper, parts of sofas, armchairs, chairs and furnishings in general);
- Medical clothing (sterile surgical gowns, sterile drapes for creating the surgical area, masks, caps and shoe covers);
- Aesthetics (disposable caps used in aesthetics, for example, in tanning salons, sheets for massage beds and for lamps, slippers for beauty salons or swimming pools, shoe covers for swimming pools, etc.);
- General clothing (internal components of footwear, straps for clothing);
- Industry (filter cloths, packaging, abrasive tools);
- Photography (photographic backdrops);
- Sport (in horse riding, for example, it is used to improve the elastic qualities of the ground on show jumping courses).

Its many applications therefore make non-woven fabric one of the most widely used synthetic materials (it is essentially a plastic), with associated disposal/recycling problems. All this material is currently in most cases sent for incineration with devastating impacts on the environment and human health. The main drawback of recycling such a material is that the product to be disposed of often contains metal elements (so-called "impurities"), such as mask clips, zips and buttons of a garment, which have to be separated from the non-woven fabric in order for it to be recycled. According to the prior art, this separation can be carried out mechanically, through the use of machinery/devices which allow the metallic elements to be separated physically from the NWF by tearing them from the waste product; more generally, there are, on the other hand, systems which involve chemical processes, as for example according to the Korean patent KR101941264, filed on 31/08/2018 in the name of S PLUS COMTECH CO LTD (KR) (Title: "Apparatus and method for recycling non-woven fabric material"), in which waste material is placed in a mixing tank designed for dispersing and mixing pulverised objects of waste non-woven fabric in water, together with a filler designed for forming a homogeneous non-woven fabric mixture; the finished product is in the form of a sheet. This solution does not provide for the separation of the metallic elements, which must be eliminated beforehand using other systems, and the material thus obtained still presents a certain degree of contamination, as the NWF is mixed with any other materials present in the waste product.

A more effective system for obtaining a full separation between the metal elements and the plastic material present in a waste product is covered by the CPC *(Cooperation Patent Classification)* B29B2017/0255 *(techniques for separating plastics from other elements, with the aim of recycling said plastic materials, by exploiting the different melting or softening temperatures of the materials which must be separated),* which exploits the different melting temperatures of the plastic and the metal "impurities" present in the waste product. In Chinese patent CN107718369, filed on 20/11/2007 in the name of XUE INHUAN (Title: "Recycling device used to remove metal impurities contained in waste plastics"), an apparatus for recycling plastics is described as an example, together with the relevant method, characterised in that the waste material is first crushed/compacted, after which it is directed to a melting station, designed for liquefying only the plastic components of the material whilst leaving the metal impurities intact (in solid form), taking advantage of the fact that such metals have a higher melting point than the plastic material. The separation of the metal elements from the molten plastic is achieved by the use of a filter layer (a mesh) through which only the liquid material passes (the metal impurities are therefore retained by the filter); the plastic material is then further heated to an optimum melting level, after which it is cooled (in a cooling channel) and lastly dried.

The melting system used in that patent is the same as the one used in the patent described below, but the subsequent filtering stage, designed to separate the remaining metal parts from the melted plastic, is objectively insufficient to obtain a pure plastic product; furthermore, the final cycle is not adequately completed, as this very important stage is completely overlooked in the description.

An apparatus for recycling non-woven fabrics having the technical characteristics described in the preamble to the appended claim 1 is also known, for example, from prior art patent documents CN108251901A, CN104029373A and EP2995436A1.

### Summary of the Invention

The aim of the invention is to overcome the above-mentioned problems of the prior art, by making an apparatus for recycling non-woven waste materials which comprises conveying the material, by means of a conveyor belt, to a compactor, which cuts, mixes, heats, dries and pre-compacts it; the compactor is equipped with a door which allows a convenient cleaning and it is also designed with a valve for monitoring the quantity of material inside, with relevant warning light. The heated and compacted material is then melted in a first single-screw extruder. In this first extruder, the material is plasticised, homogenised and mixed, and the gases, moisture and any impurities are removed by means of a vacuum system; during this step, only the plastic component of the material is substantially melted, which has a lower melting temperature than the metal components, which therefore remain in the solid state. At this point, the material (consisting of melted plastic/non-woven fabric and solid metallic impurities), and this is the main novelty of the proposed invention, is filtered through a suitable filter, so-called "without metal mesh", whose purpose is to remove metallic impurities. This filter has a micro-perforated inner part which, combined with the use of a pair of rotating blades, allows the complete removal of impurities. The remaining melted material, from which the metallic (solid) impurities have been removed, then passes through a second single-screw extruder, which melts the material at an even higher temperature and extrudes it, before feeding it through a large-area piston filter, which removes any remaining impurities in order to obtain better quality granules. The melted material coming out from the extruder, further filtered by the piston filter, is cooled with water and then cut into granules by a high-speed rotating blade; the granules then flow, together with the water from the cooling and cutting station, to a centrifugal dehydration machine, which removes the water from the granules and redirects it to the cooling/cutting station. An air transmission system finally dries and transports the granules to a suitable storage silo.

The entire system has a high level of automation, with a clear and accurate display of all setting parameters and the automatic and immediate saving of these parameters on a PC, which can be read on an LCD screen installed on the machine itself. The proposed solution therefore makes it possible to obtain an extremely "pure" material in pellets as the end product, which can then be reused for a variety of applications in the plastics industry.

### Description of the Drawings

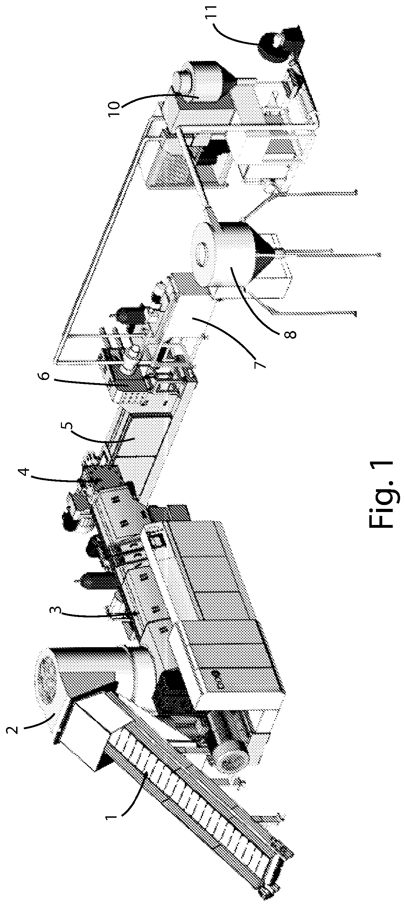

- Figure 1 shows a panoramic view of the system according to the invention, with the various elements comprising it;
- Figure 2 shows a sectional view of a part of the system, from the conveyor belt used to load the waste material up to the station for cooling and cutting the material into granules;
- Figure 3 shows the detail of the filter without wire mesh, that is to say, the element that represents the main novelty of the invention.

### Detailed Description of the Patent

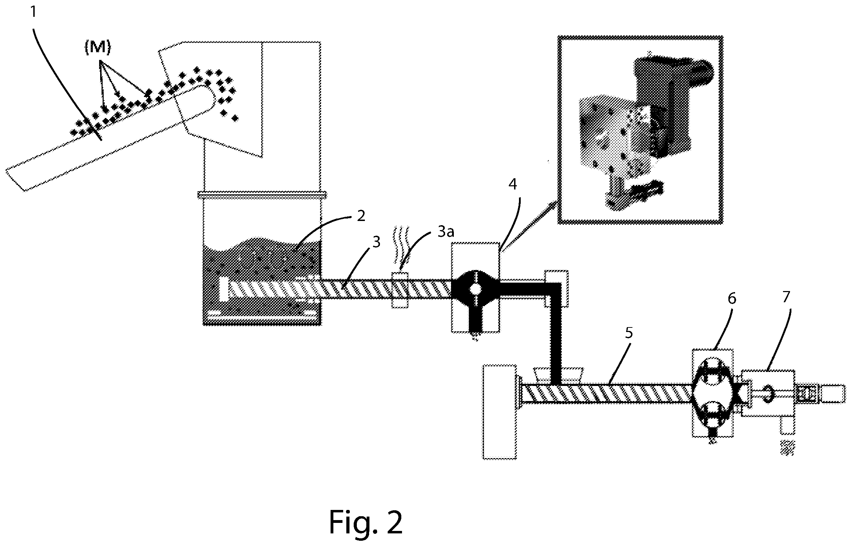

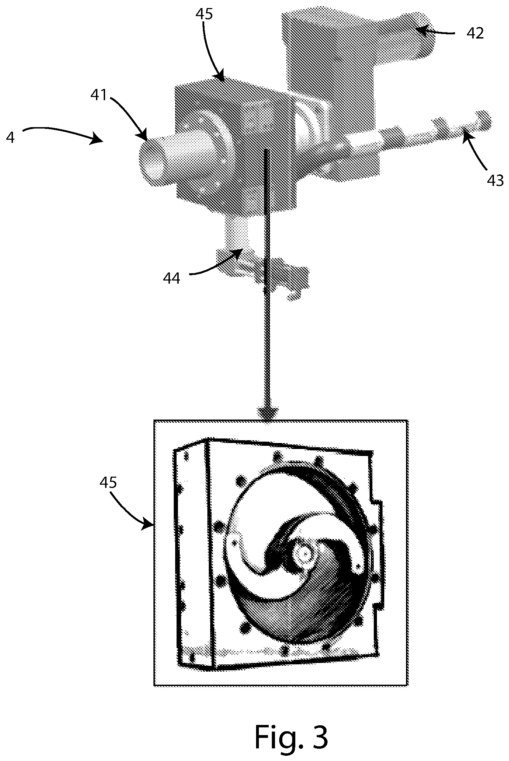

As shown in the drawings, the material (M) (see detail in Fig. 2) to be recycled, consisting of non-woven waste material with metallic components, is loaded onto the conveyor belt (1) and sent to a compactor (2), whose function is to preheat, chop and compact said material (M), which is subsequently melted in a first single-screw extruder (3), equipped with a vacuum system (3a) (see detail in Fig. 2) designed to remove humidity and any impurities; during this step, only the plastic component of the material is substantially melted, which has a lower melting temperature than the metal components, which therefore remain in the solid state. At this point, the material is filtered through an appropriate filter, so-called "without wire mesh" (4), whose purpose is to remove metallic impurities. This filter, shown in detail in Fig. 3, consists of a main body (45) whose inner part (A) is micro-perforated, so as to allow only the passage of the melted plastic; the two blades (B), located on the upper end of the inner part (A), rotate in such a way as to perform a process for removal of all the metal or other materials which stop on the inner part (A) due to the fact that they have a greater density or thickness than the density and thickness of the melted plastic. The waste removed by the blades accumulates in the lower part of the filter, where it is automatically eliminated on the upper end of the inner part (A). The other parts of the filter (4) are an inlet (41), through which the mixed melted plastic/solid impurities are conveyed to the main filter body (45), a guide motor (42), a vent pipe (43) and an automatic waste discharge device (44). The remaining melted material, from which the metallic (solid) impurities have been removed, then passes through a second single-screw extruder (5), which melts the material at an even higher temperature and extrudes it, before feeding it through a large-area piston filter (6), which removes any remaining impurities in order to obtain better quality granules. The melted material coming out from the extruder (5), further filtered by the piston filter (6), is cooled with water and then cut into granules by a high-speed rotating blade in the cooling and cutting station (7); the granules then flow, together with the water from the cooling and cutting station, to a centrifugal dehydration machine (8), which removes the water from the granules and redirects it to the cooling/cutting station (7). An air transmission system (9) finally dries and transports the granules to a suitable storage silo (10).

## Claims

1. An apparatus for recycling non-woven materials (M), equipped with a compactor (2), a first extruder (3), a second single-screw extruder (5) and a first filter (4), wherein said compactor (2) is configured to compact and heat said non-woven materials (M) feeding them through said first extruder (3) and wherein said first extruder (3) is configured to melt the plastic component of the non-woven materials (M) and the plastic impurities of said non-woven materials (M), **characterised in that** said apparatus also comprises a conveyor belt (1), a second piston filter (6) and a cooling and cutting station (7),wherein
- said conveyor belt (1) is configured to convey said non-woven materials (M) to said compactor (2),
- said first filter (4) is designed to remove solid metallic impurities and comprises a main body (45), whose inner part (A) is micro-perforated so as to allow the passage of only the molten plastic, two rotating blades (B) placed on the upper end of said inner part (A), an inlet (41) through which the molten plastic is conveyed to said main body (45) of the first filter (4), a driving motor (42), a venting duct (43) and an automatic waste discharge device (44),
- said second single-screw extruder (5) is designed to melt, extrude and direct to said piston filter (6) the material exiting said first filter (4), said piston filter (6) being designed to remove further impurities, and
- said cooling and cutting station (7) is designed to cool with water the melted material coming out from said second single-screw extruder (5) and from said piston filter (6) and to cut said melted material into granules by means of a high speed rotating blade,
- said apparatus further comprising a centrifugal dehydration machine (8), which is configured to remove the water from said granules, redirecting the water to said cooling and cutting station (7).

2. The apparatus for recycling non-woven materials (M) according to claim 1, **characterised in that** said apparatus further comprises an air transmission system (9) and a storage silo (10), said air transmission system being designed for drying and transporting said granules to said storage silo (10).

## Patentansprüche

1. Vorrichtung zur Wiederverwertung von Vliesstoffen (M), die mit einem Verdichter (2), einem ersten Extruder (3), einem zweiten Einschnecken extruder (5) und einem ersten Filter (4) ausgestattet ist, wobei der Verdichter (2) so konfiguriert ist, dass er die Vliesstoffe (M) verdichtet und erwärmt, indem er sie durch den ersten Extruder (3) führt, und wobei der erste Extruder (3) so konfiguriert ist, dass er die
Kunststoffkomponente der Vliesstoffe (M) und die Kunststoffverunreinigungen der Vliesstoffe (M) schmilzt,
**dadurch gekennzeichnet, dass** die Vorrichtung auch ein Förderband (1), einen zweiten Kolbenfilter (6) und eine Kühl- und Schneidestation (7) umfasst, wobei
- das Förderband (1) so konfiguriert ist, dass es die Vliesstoffe (M) zu dem Verdichter (2) befördert,
- der erste Filter (4) dazu bestimmt ist, feste metallische Verunreinigungen zu entfernen, und einen Hauptkörper (45), dessen innerer Teil (A) mikroperforiert ist, um nur den Durchgang des geschmolzenen Kunststoffs zu ermöglichen, zwei rotierende Schaufeln (B), die am oberen Ende des inneren Teils (A) angeordnet sind, einen Einlass (41), durch den der geschmolzene Kunststoff zu dem Hauptkörper (45) des ersten Filters (4) befördert wird, einen Antriebsmotor (42), eine Entlüftungsleitung (43) und eine automatische Abfallabfuhrvorrichtung (44) umfasst,
- der zweite Einschnecken extruder (5) so ausgelegt ist, dass er das aus dem ersten Filter (4) austretende Material aufschmilzt, extrudiert und zu dem Kolbenfilter (6) leitet, wobei der Kolbenfilter (6) so ausgelegt ist, dass er weitere Verunreinigungen entfernt, und
- die Kühl- und Schneidestation (7) dazu dient, das aus dem zweiten Einschnecken extruder (5) und dem Kolbenfilter (6) austretende geschmolzene Material mit Wasser zu kühlen und das geschmolzene Material mittels eines mit hoher Geschwindigkeit rotierenden Messers in Granulat zu schneiden,
- wobei die Vorrichtung außerdem eine Zentrifugentrocknungs maschine (8) umfasst, die so konfiguriert ist, dass sie das Wasser aus dem Granulat entfernt und das Wasser zur Kühl- und Schneidestation (7) umleitet.

2. Vorrichtung zur Wiederverwertung von Vliesstoffen (M) nach Anspruch 1, **dadurch gekennzeichnet, dass** die Vorrichtung ferner ein Luftübertragungssystem (9) und ein Lagersilo (10) umfasst, wobei das Luftübertragungssystem zum Trocknen und Transportieren des Granulats zu dem Lagersilo (10) ausgelegt ist.

## Revendications

1. Appareil pour recycler des matériaux non tissés (M), équipé d'un compacteur (2), d'une première extrudeuse (3), d'une seconde extrudeuse à vis unique (5) et d'un premier filtre (4), dans lequel ledit compacteur (2) est configuré pour compacter et chauffer lesdits matériaux non
tissés (M) en les faisant passer par ladite première extrudeuse (3) et dans lequel ladite première extrudeuse (3) est configurée pour faire fondre le composant plastique des matériaux
non tissés (M) et les impuretés plastiques desdits matériaux non tissés (M),
**caractérisé par le fait que** ledit appareil comprend également une bande transporteuse (1), un second filtre à piston (6) et une station de refroidissement et de coupe (7), dans laquelle
- ladite bande transporteuse (1) est configurée pour transporter lesdits matériaux non tissés (M) vers ledit compacteur (2),
- ledit premier filtre (4) est conçu pour éliminer les impuretés métalliques solides et comprend un corps principal (45), dont la partie intérieure (A) est micro-perforée de manière à ne laisser passer que le plastique fondu, deux lames rotatives (B) placées à l'extrémité supérieure de ladite partie intérieure (A), une entrée (41) par laquelle le plastique fondu est acheminé vers ledit corps principal (45) du premier filtre (4), un moteur d'entraînement (42), un conduit d'aération (43) et un dispositif d'évacuation automatique des déchets (44),
- ladite deuxième extrudeuse à vis unique (5) est conçue pour fondre, extruder et diriger vers ledit filtre à piston (6) la matière sortant dudit premier filtre (4), ledit filtre à piston (6) étant conçu pour éliminer d'autres impuretés, et
- ladite station de refroidissement et de coupe (7) est conçue pour refroidir à l'eau la matière fondue sortant de la deuxième extrudeuse à vis unique (5) et dudit filtre à piston (6) et pour couper ladite matière fondue en granulés au moyen d'une lame rotative à grande vitesse,
- ledit appareil comprenant en outre une machine de déshydratation centrifuge (8), configurée pour retirer l'eau desdits granulés, en redirigeant l'eau vers ladite station de refroidissement et de coupe (7).

2. Appareil pour recycler des matériaux non tissés (M) selon la revendication 1, **caractérisé en ce que** ledit appareil comprend en outre un système de transmission d'air (9) et un silo de stockage (10), ledit système de transmission d'air étant conçu pour le séchage et le transport desdits granulés vers ledit silo de stockage (10).
